# EUROPEAN PATENT APPLICATION

(11) **EP 1 522 768 A2**
(43) Date of publication of application: **13.04.2005**
(21) Application number: 04023901.4
(22) Date of filing: 07.10.2004
(51) Int. Cl.: F16H 57/04

(54) **Differential gearing for vehicle**

(30) Priority: 09.10.2003 JP 2003350655
(71) Applicant: Toyoda Koki Kabushiki Kaisha, Kariya-shi, Aichi (JP)
(72) Inventor: Kai, Ryuichiro, 1-5-14 Shinsayama Sayama-shi Saitama-ken (JP); Nishiji, Makoto, 1-5-14 Shinsayama Sayama-shi Saitama-ken (JP)
(74) Representative: HOFFMANN - EITLE

(57) **Abstract**

An internal gear 4 is fitted within a housing 2, and a sun gear 6 is disposed inside the internal gear in concentric relationship therewith. A plurality of planet gears 8 are carried by a planetary carrier 10 connected to the housing 2 and are in meshing engagement with the internal gear 4 and the sun gear 6. Washers 16, 18, 20, 22 and 24 are disposed in regions where the members 2, 4, 6, 8 and 10 slide against respectively.

Hollow shafts are connected to a coupling 14 which is connected to the inner periphery of the internal gear 4 and to the inner periphery of the sun gear 6, and a drive from an engine which is input to the housing 2 is delivered through the both shafts. A lubricant oil is introduced through the shaft to lubricate sliding parts which are disposed radially outward of the shaft.

A perfect lubrication of the interior of the differential gearing is achieved, seizure resistance can be improved and the occurrence of noises can be reduced.

## Description

### Techinal Field

The present invention relates to a differential gearing for vehicle, and in particular, to a differential gearing for vehicle of a planetary gear type with a torque responsive differential action limiting function.

### Background Art

A differential gearing for vehicle including a planetary gear mechanism comprising an internal gear and a sun gear which are disposed in coaxial relationship, pinion gears which interconnect the internal gear and the sun gear, and a pinion carrier including housing chambers each receiving one of the pinion gears so as to be rotatable therein at the tooth crest is disclosed in Japanese Laid-Open Patent Application No. 4-312,247.

In a conventional differential gearing for vehicle constructed in the manner mentioned above, the planetary gear mechanism is disposed within a differential gearing case, which is in turn supported within a differential gearing carrier through a bearing interposed therebetween. The differential gearing case has a through-opening and helical oil grooves which are formed around the inner periphery of left and right cylindrical portions. A lubricant oil is injected into the differential gearing carrier, and flows into the differential gearing case through the through-opening and the oil grooves in order to lubricate meshing and sliding parts of gears. Each pinion gear is formed with an oil hole in which the lubricant oil is stored upon flowing into the differential gearing case to be supplied to the locations to be lubricated.

When the differential gearing case is formed with the through-opening in order to introduce the lubricant oil therein, there is a difficulty that during the running of a vehicle, the lubricant oil stored within the differential gearing case may find its way out through the through-opening, resulting in a dissatisfactory lubrication.

### Disclosure of the invention

It is an object of the present invention to provide differential gearing for vehicle which is capable of completely lubricating a planetary gear mechanism and other sliding parts which are received within a housing.

This object is accomplished by providing a differential gearing for vehicle including a housing and a planetary gear mechanism received within the housing and comprising an internal gear, a sun gear, planet gears and a planetary carrier, all representing rotating members, the differential gearing for vehicle comprising a shaft disposed in alignment with the axis of the planetary gear mechanism and connected to one of the rotating members to introduce a lubricant oil from the shaft into the housing, thus lubricating sliding parts between the rotating members which are disposed radialy outward of the shaft.

An invention defined in Claim 2 is characterized in that the wall surface of the housing is devoid of an oil hole which extends therethrough in a region where the planetary gear mechanism is received.

In the differential gearing for vehicle according to the present invention, a lubricant oil is introduced from a shaft disposed in alignment with the axis to lubricate sliding parts between rotating members which are disposed radialy outward of the shaft. In addition, in a region where the planetary gear mechanism is received, the wall surface of the housing is not formed with an oil hole which extends therethrough, thus preventing an egress of the oil through an oil hole and avoiding the likelihood of a shortage of the lubricant oil. In this manner, a perfect lubrication is enabled, bringing forth advantages that a seizure resistance is improved and the occurrence of noises is reduced.

### Brief Description of Drawings

Fig. 1 is a longitudinal section of a differential gearing for vehicle according to one embodiment of the present invention, the section being taken along the line I-I shown in Fig. 2; and
Fig. 2 is a cross section taken along the line II-II shown in Fig. 1.

### Best Mode for Carrying Out the invention

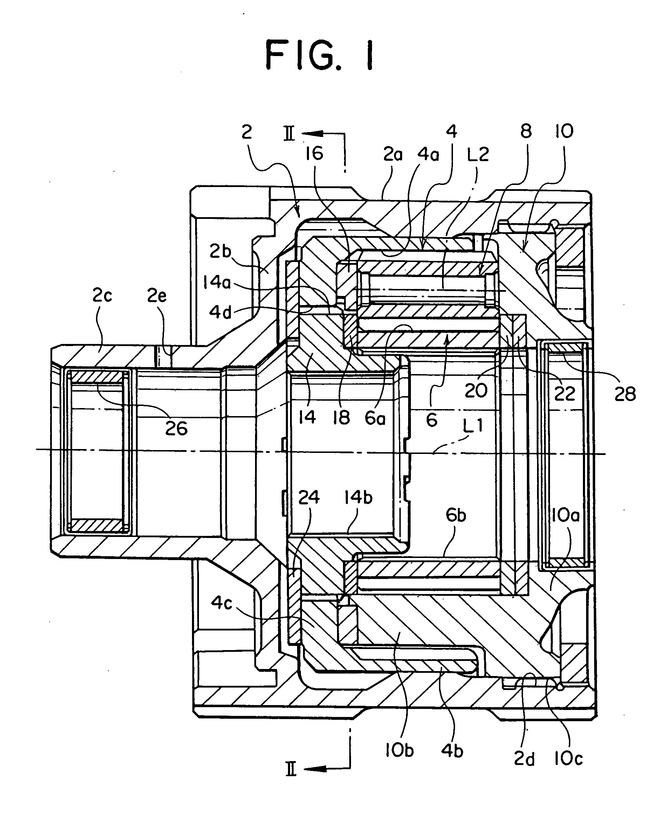

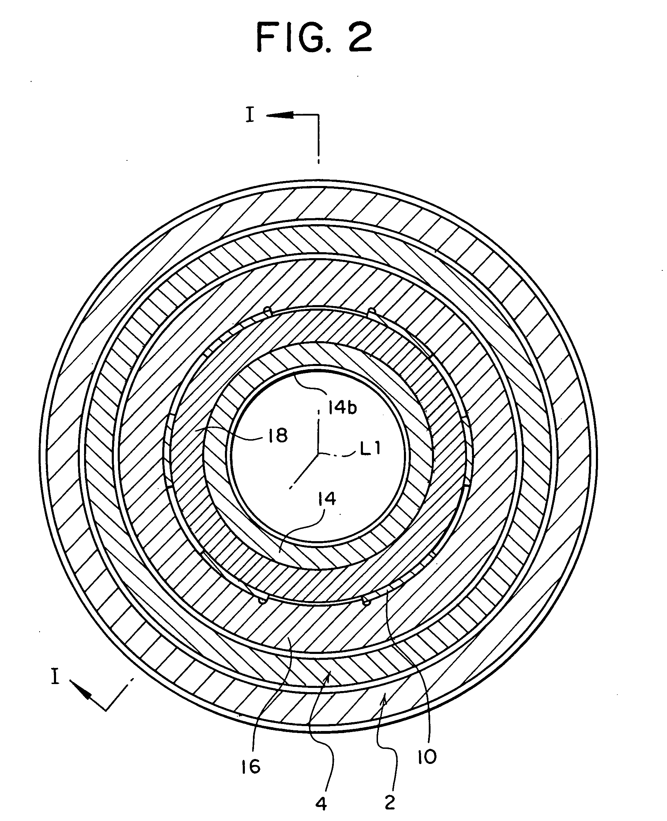

An embodiment of the present invention will now be described with reference to the drawings. Fig. 1 is a longitudinal section of a differential gearing for vehicle according to one embodiment of the invention (the section being taken along the line I-I shown in Fig. 2), and Fig. 2 is a cross section taken across the line II-II shown in Fig. 1. The differential gearing includes a cylindrical housing 2 in which a planetary gear mechanism comprising an internal gear 4, a sun gear 6, a plurality of planet gears 8 and a planetary carrier 10 which carries the planet gears 8 is received.

The housing 2 includes a cylindrical portion 2a of an increased diameter which has a bottom 2b at one end or left end as viewed in Fig. 1, and a cylindrical portion of a reduced diameter 2c projects externally from the bottom. An internal gear 4 having internal teeth 4a formed around its inner peripheral surface is rotatably received within the cylindrical portion 2a of an increased diameter at a location toward the bottom 2b. A sun gear 6 is disposed inside the internal gear 4 for rotation about an axis which coincides with an axis of rotation L1 of the internal gear 4. The sun gear 6 is an external gear which is formed with teeth 6a around its outer peripheral surface. A plurality of planet gears 8 which are carried by a planetary carrier 10 are disposed between the internal gear 4 and the sun gear 6 in meshing engagement with the both gears 4 and 6.

The planetary carrier 10 rotates about the axis of rotation L1 of the internal gear 4 and the sun gear 6. Each planet gear 8 which is carried by the planetary carrier 10 is capable of rotation in a manner such that its center axis L2 revolves about the axis of rotation L1 of the planetary carrier 10 as the planetary carrier rotates, and is also capable of rotation about the axis L2 within a carrying space formed in the planetary carrier 10. In accordance with the invention, the internal gear 4, the sun gear 6 and the planetary gears 8 have helical gear teeth, and each planet gear 8 meshes with the internal gear 4 disposed on the outside thereof and with the sun gear 6 disposed on the inside thereof.

The planetary carrier 10 comprises an annular base 10a (located toward the right end as viewed in Fig. 1) and a cylindrical portion 10b which is disposed perpendicular with respect to the base 10a. Planet gear carrying spaces (not shown) are formed in the cylindrical portion 10b at a given circumferential interval and each planet gear 8 is inserted into one of the planet gear carrying spaces to be held therein in a rotatable manner. The planet carrier 10 is inserted into the housing 2 with the free end of the cylindrical portion directed toward the bottom of the housing 2 while the planet gears 8 are inserted into the planet gear carrying spaces. Then a spline 10c formed around the outer periphery of the base 10a is engaged with a spline 2d formed around the inner surface of the opening of the housing 2, thus connecting the planetary carrier 10 and the housing 2 rotatively for integral rotation.

The planet gear carrying space formed in the cylindrical portion 10b of the planetary carrier 10 is constructed such that the sidewalls on the opposite sides which hold the planet gear 8 are configured to be accurate with an internal diameter which substantially coincides with the diameter of the tooth crest of the planet gear 8, and when the planet gear 8 rotates about its own axis, the tooth crest thereof slides against the sidewall of the carrying space.

The internal gear 4 includes a cylindrical portion 4b and a flange 4c which extends radially inward from one end (left end as viewed in Fig. 1) of the cylindrical portion 4b. The internal teeth 4a are formed around the inner peripheral surface of the cylindrical portion 4b while a spline 4d is formed on the inner peripheral surface of the flange 4c. A spline 14a formed around the outer periphery of a coupling 14 is fitted with the spline 4d on the flange 4c.

A washer 16 is disposed between one end face (right-hand end face as viewed in Fig. 1) on the inwardly extending flange 4c of the internal gear 4 and the inner end face of the planetary carrier 10 and the end faces of the planet gears 8 for receiving a thrust during a relative rotation between the internal gear 4 and the planet gears 8. Washers 18 and 20, 22 are disposed between the coupling 14 which is splined to the internal gear 4 and one end face (left-hand end face as viewed in Fig 1) of the sun gear 6, and between the other end face of the sun gear 6 and the annular base 10a of the planetary carrier 10. Similarly, a washer 24 is disposed between the flange 4c of the internal gear 4 and the end face of the coupling 14 and the bottom 2b of the housing 2. These washers 16, 18, 20, 22 and 24 provide a differential action limiting function by frictional forces which are developed by the sliding motion of the members 2, 4, 6, 8, 10 and 14 disposed on the opposite sides of these washers as they rotate relative to each other during the operation of the differential gearing for vehicle.

In the differential gearing for vehicle according to this embodiment, a drive from an engine is input to the outer periphery of the cylindrical portion 2a of an increased diameter of the housing 2, for example, while the spline 14b on the inner periphery of the coupling 14 which is splined to the internal gear 4 and the spline 6b formed around the inner periphery of the sun gear 6 are connected to shafts, not shown, respectively, to deliver outputs to front and rear wheels of four wheel driven vehicle. It is to be noted that a shaft which is connected to the coupling 14 and a shaft which is connected to the sun gear 6 are rotatably supported by a bearing 26 disposed within the housing 2 and a bearing 28 within the planetary carrier 10.

In a conventional arrangement, the wall of the housing is formed with oil holes extending therethrough at the front and the rear surface, and a lubricant oil is introduced through these through-holes for lubricating various sliding parts. However, in the present embodiment, the bottom 2b of the housing 2 in which the planetary gear mechanism is received and the annular base 10a of the planetary carrier 10 are not formed with any oil hole which is used for introducing the lubricant oil into the housing 2 or for displacing it out of the housing.

As mentioned above, the internal gear 4 (or more exactly, the coupling 14 connected to the internal gear 4) and the sun gear 6 of the planetary gear mechanism which is received within the housing 2 are splined to shafts, not shown. These shafts are hollow, and a lubricant oil is pumped into the housing 2 through one of the shafts. The lubricant oil which is introduced into the housing 2 from a center of one of hollow shafts passes through the sliding areas where the washers 16, 18, 20, 22 and 24 are disposed, through the meshing area between the planet gears 8 and the internal gear 4 and the sun gear 6 and also through the sliding area between the tooth crests of the planet gears 8 and the carrying spaces in the planetary carrier 10 to lubricate the various sliding parts, whereupon the lubricant oil passes around the outer periphery of the shaft to be externally displaced through clearances between the shaft and the bearings 26 and 28 or through a small opening 2e formed in the cylindrical portion 2c of a reduced diameter of the housing 2.

The operation of the differential gearing for vehicle including the planetary gear mechanism constructed in the manner mentioned above will be described for an example in which the housing 2, the internal gear 4 and the sun gear 6 are connected to the engine and the front and the rear wheel of a four wheel driven vehicle. When the vehicle is running straightforward on a normal flat road, both the front and the rear drive wheel are rotating in an identical manner, and accordingly, the internal gear 4, the planet gears 8 and the sun gear 6 do not rotate relative to each other while maintaining their meshing engagement, and the entire differential gearing rotates integrally about the axis of rotation L1.

When a differential rotation occurs between the front and the rear drive wheel as when cornering, the planet gears 8 carried by the planetary carrier 10 rotate about their own center axis L2 while revolving about the axis of rotation L1 to correct for the differential rotation. Specifically, the differential action is provided by the planet gears 8 which rotate in a direction to accelerate one and to decelerate the other of the internal gear 4 (or the coupling 14) and the sun gear 6 which are connected to the front and the rear drive wheel, respectively, in response to the differential rotation of the front and the rear drive wheel.

When there occurs a difference in the grip of the front and the rear wheel as when the four wheel driven vehicle is running on a bad road, the differential gearing provides a torque distribution. Specifically, frictional forces which are developed by the meshing engagement between the gears 4, 6 and 8 are effective to decrease the rotating force of an idling drive wheel and an amount of torque which corresponds to the reduction is transmitted to a higher traction drive wheel, thus providing a torque distributing function or differential action limiting function. More specifically, when one of the drive wheels slips, the planet gears 8 which mesh with the internal gear 4 and the sun gear 6 rotate about their own axes. The internal gear 4, the sun gear 6 and the planet gears 8 have helical gear teeth, and accordingly, upon relative rotation therebetween, reactions to their rotations produce axial thrusts and also frictional forces on the abutting surfaces of the planetary carrier 10 and the planet gears 8. Such frictional forces are effective to limit the differential action. In addition, the internal gear 4 and the sun gear 6 are disposed to be axially movable and their thrusts are reacted by the washers 16, 18, 20, 22 and 24 which are disposed between the gears 4 and 6 and other rotating members 2, 8, 10 and 14, and resulting frictional forces are also effective to limit the differential action.

It will be noted that the lubricant oil is introduced through shafts which are splined to the coupling 14 and the sun gear 6 to lubricate the sliding areas. The internal gear 4, the sun gear 6, the coupling 14 connected to the internal gear 4, the planet gears 8 and the planetary carrier 10 which carries the planet gears 8, namely, members which constitute the planetary gear mechanism are disposed at locations radially outward of the shaft. Accordingly, the lubricant oil which is introduced from the center of one of hollow shafts are effective to lubricate the meshing parts of the internal gear 4, the planet gears 8 and the sun gears 6, and sliding parts between the tooth crests of the planet gears 8 and the carrying spaces in the planetary carrier 10 which carries the planet gears 8 and other portions such as between the gears 4 and 6 and the coupling 14 and the housing 2 or between the gears 4, 6 and 8 and the planetary carrier 10 which develop frictional forces by sliding motion to contribute to limiting the differential action. After lubricating the meshing parts and the sliding parts, the lubricant oil is externally displaced through clearances between the outer periphery of a shaft which is located radially inward of these sliding parts and the bearings 26 and 28 and through the small hole 2e formed in the cylindrical portion 2c of a reduced diameter of the housing 2.

In the present embodiment, an arrangement is such that lubricant oil is introduced from the center of rotation of the differential gearing in order to lubricate meshing parts and sliding parts which are located radially outward, and after lubrication, the lubricant oil is again displaced through the inner side of the shaft which is located inward of the sliding parts. Because there is no oil hole which allows the lubricant oil to be introduced or displaced in the bottom 2b of the housing 2 and the annular base 10a of the planetary carrier 10 which is connected to the opening of the cylindrical portion 2a of an increased diameter of the housing 2, a perfect lubrication of the sliding surfaces can be achieved. As a consequence, there is no likelihood for the shortage of a lubricant oil to occur, the seizure resistance is improved and the occurrence of the noise can be reduced.

## Claims

1. A differential gearing for vehicle including a housing and rotating members such as an internal gear, a sun gear, a plurality of planet gears and a planetary carrier which carries the planet gears which constitute together a planetary gear mechanism received within the housing; comprising
a shaft disposed in a region of the axis of the planetary gear mechanism and connected to a selected one of the rotating members, a lubricant oil being introduced into the housing through the shaft to lubricate sliding parts of the rotating members which are disposed radially outward of the shaft.

2. A differential gearing for vehicle according to Claim 1 in which the wall surface of the housing is not formed with an oil hole which extends through the wall surface in a region in which the planetary gear mechanism is received.

3. A differential gearing for vehicle according to Claim 1 in which the shaft is hollow, and the lubricant oil is introduced into the housing through the inside of the shaft.

4. A differential gearing for vehicle according to Claim 1 in which the lubricant oil which is introduced into the housing is externally displaced at a location which is disposed radially inward of sliding parts of the rotating members.

5. A differential gearing for vehicle according to Claim 4 in which the lubricant oil is externally displaced from within the housing through the outer peripheral surface of the shaft.
